**Europäisches Patentamt**

**European Patent Office**

**Office Européen des brevets**

(19)

(11) Veröffentlichungsnummer : **0 245 709 B1**

(12) # EUROPÄISCHE PATENTSCHRIFT

(45) Veröffentlichungstag der Patentschrift :
**02.01.91 Patentblatt 91/01**

(51) Int. Cl.⁵ : **H04M 11/02**

(21) Anmeldenummer : **87106240.2**

(22) Anmeldetag : **29.04.87**

(54) Haus- und Personenrufanlage mit Namensfeld.

(30) Priorität : **12.05.86 DE 3615939**

(43) Veröffentlichungstag der Anmeldung :
**19.11.87 Patentblatt 87/47**

(45) Bekanntmachung des Hinweises auf die
Patenterteilung :
**02.01.91 Patentblatt 91/01**

(84) Benannte Vertragsstaaten :
**DE FR GB IT**

(56) Entgegenhaltungen :
**DE-A- 1 944 845**
**FR-A- 2 357 125**
**FR-A- 2 494 063**

(73) Patentinhaber : **Siemens Aktiengesellschaft**
**Wittelsbacherplatz 2**
**D-8000 München 2 (DE)**

(72) Erfinder : **Wolf, Johann, Dipl.-Ing.**
**Föhrenweg 20**
**D-8401 Pentling (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Haus- und Personenrufanlage mit Namensfeld, Ruftaste und Sprecheinrichtung, wie sie z. B. aus der FR-A-2 357125 bekannt ist. Klingelanlagen in Wohnblocks sind bei größeren Anlagen großflächig ausgedehnt und für den Besucher unübersichtlich. Sie sind auch in Herstellung und Montage aufwendig.

Derartige Anlagen sind in der Regel als Torsprechanlagen ausgeführt, die erstrecht wegen der vielen Namensschilder und der jeweils zugeordneten Ruftaste viel Platz benötigen. Sie können daher kaum standardisiert werden, da sie der jeweils entsprechenden Anzahl an Parteien bzw. Wohnungen angepaßt werden müssen. Darüber hinaus ist jede Änderung aufwendig, da beispielsweise ein neues Namensschild zu fräsen ist.

Die Schilder von Hausrufanlagen sind nicht nur schwer zu finden, sondern im Dunkeln ohne besondere Beleuchtung auch kaum zu lesen. Für einen Besucher ist es schwierig, einen bestimmten Namen zu suchen, wenn er nicht zusätzliche Informationen hat, beispielsweise die Türnummer weiß. Suchhilfen können kaum gegeben werden.

Der Erfindung liegt die Aufgabe zugrunde, eine Haus- und Personenrufanlage mit Namensfeld, Ruftaste und Sprecheinrichtung zu entwickeln, die sich für unterschiedliche Teilnehmerzahlen eignet und bei der die geschilderten Nachteile vermieden werden.

Die Lösung der geschilderten Aufgabe erfolgt durch eine Anlage mit den kennzeichnenden Merkmalen nach Patentanspruch 1. Danach läßt sich eine Standardeinheit aus Display für Türnummer und Namen, Wähleinrichtung für Türnummer sowie für Namen unter Verwendung von Lauftastenschaltungen sowie mit Ruftaste, Klingel, Lautsprecher und Mikrophon aufbauen.

Derartige Display-Schaltungen sind im Prinzip bei elektronischen Wörterbüchern, Uhren und ähnlichen Einrichtungen bekannt. Solchen Schaltungen ist gemeinsam, daß sie die an sich für die Funktion erforderliche Tastenzahl stark vermindern. Der Erfindung liegt jedoch die Erkenntnis zugrunde, daß bei Rufanlagen in der geschilderten Ausführung besonders viele bereits geschilderte Vorteile erzielt werden.

Wenn die Standardeinheit mit einer busorientierten Rufanlage gekoppelt wird, kann die Logik für die Display-Steuerung und die dafür notwendige Stromsversorgung auch für alle gekoppelten Sprech- und Klingelanlagen verwendet werden. Die gleiche Standardeinheit kann auch für eine selektive Ruf-, Sprech-, Gegensprech- oder Wechselsprechanlage eingesetzt werden. Durch die Displays können die Namensfelder auch im Dunkeln ohne zusätzliche Beleuchtung abgelesen werden.

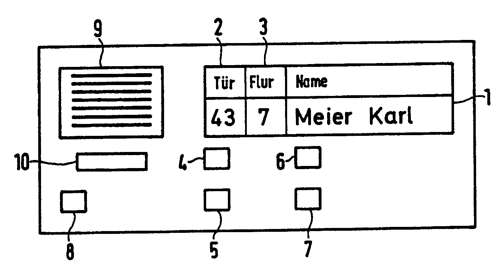

In der Zeichnung ist für eine Haus- und Personenrufanlage mit Namensfeld, Ruftaste und Sprecheinrichtung eine Standardeinheit grob schematisch veranschaulicht.

Das Namensfeld und ein Feld für zwei Ordnungsnummern sind als Display 1 bzw. 2 und 3 ausgeführt. Dem Namens-Display 1 und dem Display für Ordnungsnummern - 2, 3 - sind jeweils zwei Tasten 4, 5 und 6, 7 einer Funktionseinheit in Lauftastenschaltung in besonderer Weise zugeordnet : Die Betätigung einer Taste 6 erster Ordnung ruft einen ersten Buchstaben eines Namens auf und die Betätigung einer Taste 4 eine Ordnungsnummer. Bei wiederholter Betätigung der Taste 6 wird der im Alphabet nächste Buchstabe und bei Betätigung der Taste 4 die in der Ziffernfolge nächste Zifferngruppe, z. B. Zehnerblöcke, aufgerufen. Bei längerer Betätigung laufen die Anfangsbuchstaben bzw. die Zifferngruppen durch. Die Betätigung der Taste 7 zweiter Ordnung für Namen läßt zum Anfangsbuchstaben Namen vervollständigen. Bei längerer Bedienung laufen die Ergänzungen durch. Die Betätigung der Taste zweiter Ordnung für Ordnungsnummern, die Taste 5, läßt die Ziffern einzeln langsam durchlaufen.

Wenn der entsprechend Name aufgerufen ist, sei es über die Namen oder über die Ordnungsnummer, kann durch betätigen einer Ruftaste 8, beispielsweise einer Klingel eine Verbindung zu einer Partei hergestellt werden und über eine Sprecheinrichtung aus Lautsprecher 9 und Mikrophon 10 Informationen ausgetauscht werden.

## Ansprüche

Haus- und Personenrufanlage mit Namensfeld, Ruftaste (8) und Sprecheinrichtung (9, 10), **dadurch gekennzeichnet**, daß das Namensfeld als Display (1) aufgebaut ist, dem ein weiteres Display (2, 3) für zumindest eine Ordnungsnummer beigeführt ist, daß dem Namens-Display (1) und dem Display (2, 3) für Ordnungsnummern jeweils zwei Tasten (4, 5 ; 6, 7) einer Funktionseinheit in Lauftastenschaltung derart zugeordnet sind, daß die Betätigung einer Taste (6 ; 4) erster Ordnung einen ersten Buchstaben eines Namens bzw. eine Ordnungsnummer aufruft, bei wiederholter Betätigung den im Alphabet nächsten Anfangsbuchstaben bzw. die in der Ziffernfolge nächste Zifferngruppe aufruft, bei längerer Betätigung die Anfangsbuchstaben bzw. die Ziffern durchlaufen läßt und daß die Betätigung einer Taste zweiter Ordnung (7) Namen zum Anfangsbuchstaben vervollständigt und bei längerer Bedienung durchlaufen läßt und daß die Betätigung einer Taste zweiter Ordnung für Ziffern (5) diese langsam durchlaufen läßt.

## Claims

A house- and person-calling device with a name panel, a ringing key (8) and speaking device (9,10), characterised in that the name panel is constructed as a display (1), to which is added a further display (2,3) for at least one order number, in that allocated to the name display (1) and the display (2,3) for order numbers there are in each case two keys (4,5 ;6,7) of one functional unit in the stepping key circuit such that activation of a key (6 ;4) of the first order calls up either an initial character of a name or an order number, with repeated activation the next character in the alphabet is called up, or the next group of figures in the sequence, with longer activation the initial characters or the figures are passed through and in that activation of a key of the second order (7) completes names from initial characters and with longer operation retrieves passes through [these] and in that activation of a key of the second order for figures (5) passes through these slowly.

## Revendications

Dispositif d'appel pour immeubles et personnes comportant un panneau à cases nominatives, une touche d'appel (8) et un dispositif d'intercommunication ou interphone (9, 10), caractérisé par le fait que le panneau à cases nominatives est constitué sous la forme d'un dispositif de visualisation (1) auquel est associé un second dispositif de visualisation (2,3) pour au moins un numéro d'ordre, qu'au dispositif de visualisation des noms (1) et au second dispositif de visualisation pour le numéro d'ordre sont associées respectivement deux touches (4,5 ; 6,7) d'une unité de fonctionnement en montage séquentiel de touches de façon que la manoeuvre d'une touche (6 ;4) du premier ordre appelle une première lettre d'un nom ou un premier numéro d'ordre, que la manoeuvre répétitive appelle la lettre alphabétique suivante ou le groupe de chiffres suivant dans la suite des chiffres, que lors d'une manoeuvre plus longue il laisse passer les lettres initiales ou les nombres, et que la manoeuvre d'une touche du second ordre (7) complète les lettres initiales en les noms et laisse défiler ceux-ci lors d'une manoeuvre de longue durée et que la manoeuvre d'une touche du second ordre pour les chiffres (5) laisse défiler ceux-ci lentement.

| Tür | Flur | Name |
|-----|------|------|
| 43 | 7 | Meier  Karl |